# EUROPEAN PATENT APPLICATION

(11) **EP 1 447 132 A1**
(43) Date of publication of application: **18.08.2004**
(21) Application number: 03030008.1
(22) Date of filing: 30.12.2003
(51) Int. Cl.: B01J 35/04, F01N 3/28

(54) **Ceramic catalyst carrier having circular-cell honeycomb structure**

(30) Priority: 17.02.2003 KR 2003009715; 24.07.2003 KR 2003050876
(71) Applicant: HYUNDAI MOTOR COMPANY, Seoul (KR)
(72) Inventor: Choi, Myung Sik, Seocho-gu, Seoul (KR)
(74) Representative: Reinhard - Skuhra - Weise & Partner GbR

(57) **Abstract**

A catalyst carrier having a circular-cell honeycomb structure formed from a plurality of cell passages whose inner surfaces are substantially circular and are coated with a catalyst for oxidizing and/or deoxidizing exhaust gas of a vehicle, wherein the circular cross-section cells are integrally formed with the catalyst carrier by extrusion. The catalyst carrier allows the catalyst layer to be uniformly coated on the inner surface of the cell while reducing the amount of catalyst consisting of precious metals, and the cell-density can be increased by minimizing the height between the centers of the cells vertically disposed.

## Description

### CROSS-REFERENCE TO RELATED APPLICATION

This application claims priorities of Korean Application No. 10-2003-0050876 and Korean Application No. 10-2003-0009715, filed on July 24, 2003 and February 17, 2003, respectively, the disclosure of which is incorporated fully herein by reference.

### FIELD OF THE INVENTION

The present invention relates to a catalyst carrier having a circular-cell honeycomb structure, and more particularly to a ceramic catalyst carrier having a plurality of cell passages whose inner surfaces are coated with a catalyst, wherein the circular-cells are integrally formed with the catalyst carrier by extrusion.

### BACKGROUND OF THE INVENTION

In general, automobiles obtain power by combustion of fossil fuel such as gasoline. Imperfect combustion caused by characteristics of an internal combustion engine inevitably generates toxic chemicals, such as, for example, carbon monoxide, nitrogen oxide, and the likes.

For purification and prevention of such toxic chemicals, automobiles are provided with various devices at the intake channel, the combustion room, and the exhaust channel. Particularly, a catalytic converter is disposed in line with the exhaust pipes, in the exhaust channel, for purifying toxic chemicals contained in exhaust gas. The catalytic converter comprises (1) an oxidizing catalyst that converts carbon monoxide (CO) and hydrocarbon (HC) into water (H₂O and carbon dioxide (CO₂) and (2) a deoxidizing catalyst that converts nitrogen oxides (NOₓ) into nitrogen (N₂) and carbon monoxide (CO). The catalytic converter generally includes a catalyst carrier, which is coated with a catalyst, and a housing encompassing the catalyst carrier. To optimize the efficiency of the catalytic converter, the catalyst carrier has a cell type arrangement so that the catalyst can reach an activating temperature rapidly and so that the staying time of the exhaust gas in the catalytic converter can be extended. Accordingly, exhaust gas introduced into the housing via exhausting pipes reacts with the catalyst coated on the carrier. After the oxidizing and/or deoxidizing reaction, the exhaust gas is discharged into an outlet.

For example, Japanese patent publication No. S56-147637 discloses a catalyst carrier with cells having triangular, rectangular, and a hexagonal cross-sectional shapes. These cells, whose angular portion is provided by a fillet, are positioned in a honeycomb structure.

For example, Japanese patent publication No. S62-225250 discloses a honeycomb structure having hexagonal cells wherein each comer of which is curved at a radius of 1mm or greater.

For example, Japanese patent publication No. H7-39760 discloses a hexagonal-cell honeycomb structure wherein the upper and lower limits of bulk density are specified by setting the rib thickness at 0.05 to 0.15mm, and the porosity from 0.65 to 0.95.

For example, Japanese patent publication No. H8-193512 discloses a hexagonal-cell honeycomb structure, which is located close to an engine to improve the catalyst's warm-up property.

For example, Japanese patent publication No. H11-320723 discloses a hexagonal-cell honeycomb structure whose ratio of breaking strength in axes is greater than 0.9.

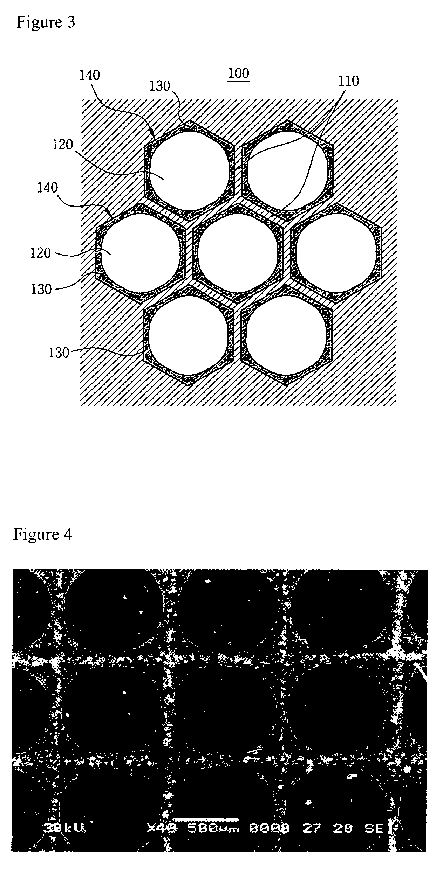

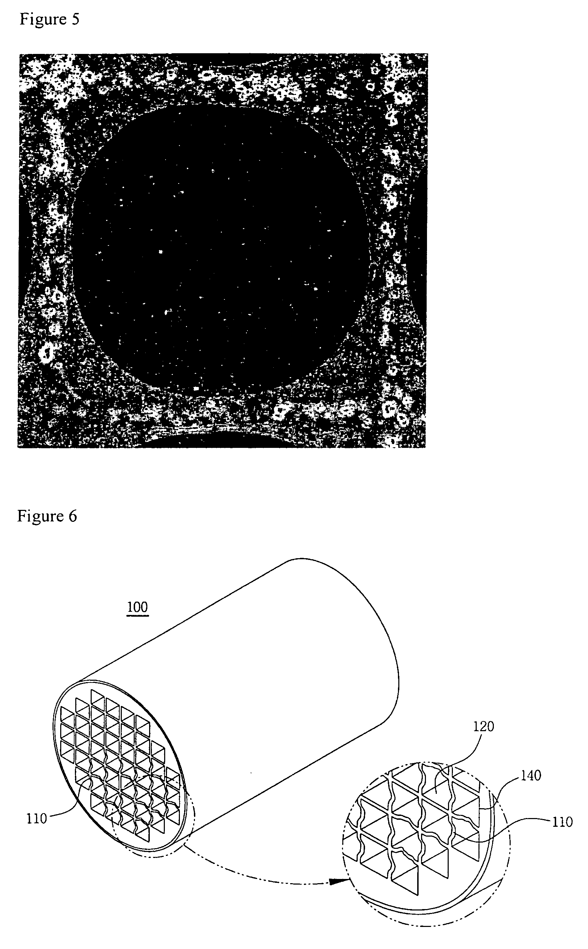

Improvements are needed in the prior art structures. As shown in Figs. 4 and 5 illustrating a catalyst carrier having rectangular cells, a catalyst layer (made of alumina or the like) coated on the inner surface of the cell is excessively concentrated on each comer. Therefore, conventional catalyst carriers having rectangular-cells or hexagonal-cells are disadvantageous in that the catalyst layer cannot be uniformly coated on the surface of the cells due to excessive concentration of the layer at each comer. Such irregularity in the concentration of the catalyst layer leads to a fluctuation of an exhaust gas, which incurs a decrease in catalyst carrier's the efficiency of purification.

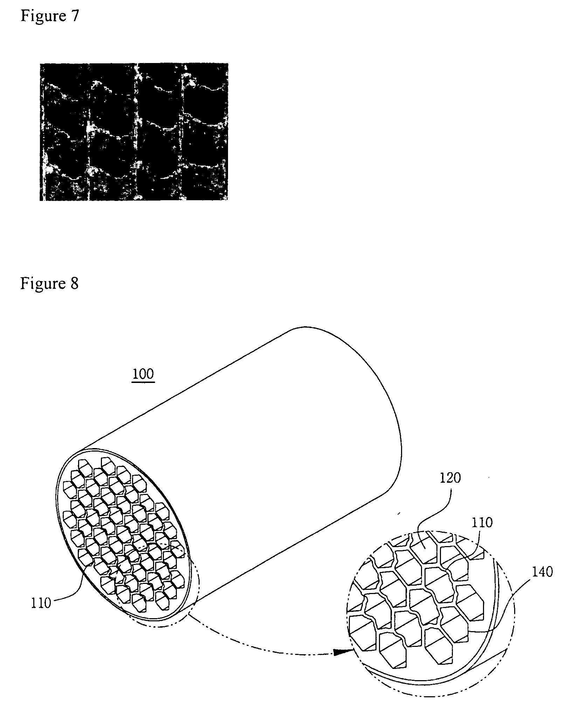

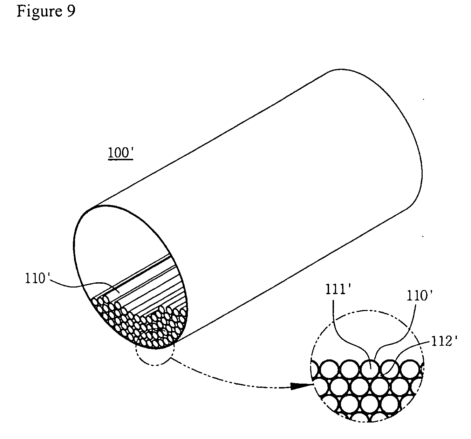

Additionally, as shown in Figs. 6 to Fig. 7, a catalyst carrier having rectangular or hexagonal-cells is vulnerable to erosion caused by an exhaust gas containing iron oxide because partition walls separating each cell are thin walls, having uniform thickness. In order to try to overcome the foregoing problem, Japanese patent publication No. H7-243322 provides a catalyst carrier made of a metal. The metallic catalyst carrier, as shown in Fig. 9, is an assembly of a plurality of metallic pipes having a circular cross-section. The catalyst is coated on both inner surfaces and outer surfaces of the metallic pipes.

However, coating a catalyst on such metallic pipes is difficult due to the inherent property of the metals. Thus, to enhance the adhesive strength of the coating it is necessary to etch the surfaces of the metal pipes. Such an etching process is both labor-intensive work and cost increasing.

Furthermore, because such a catalyst carrier is formed by accumulating a plurality of thin pipes, it is disadvantageous in that the OFA (Open Frontal Area) of the catalyst carrier is decreased relatively. The decrease of OFA and the use of metal eventually lead to time delay in reaching an activating temperature of the catalyst, declination of purifying efficiency, and an increase of required engine discharging pressure. When the metallic catalyst carrier is formed with thin metallic pipes to have substantially the same OFA, there is a risk of metallic pipe meltdown due to contact with a high temperature exhaust gas, for example, at 9000 or higher. To prevent meltdown, the thickness of the metal pipes cannot be thinner than a certain limit, which results in delaying the catalyst reaching its activating temperature.

Another problem of such a catalyst carrier is that the both outer and inner surfaces of the metal pipes should be coated with a catalyst (generally a precious metal) to prevent exhaust gas from being discharged, without purification, through the passage formed between the outer surfaces of the metal pipes. However, the cross-sectional shape of the passage formed by outer surfaces of the metal pipes is not appropriate for efficient exhaust gas pass- through. Blocking the passages formed by the outer surfaces of the metal pipes is an uneconomical approach to overcome this shortcoming, as it would entail increased fabrication cost due to need for an additional step. In the light of the amount of the catalyst (precious metal) and the efficiency of purification, such a catalyst carrier is not economical.

Yet another problem in use of such a catalyst carrier is a significant increase in cost of fabricating a plurality of metal pipes by welding or the like. For example, 13500 separate metal pipes are required for constructing a catalyst carrier having diameter of 110mm and density of 900cpsi/2.5mil.

A need exists for a catalyst carrier that can be uniformly coated with a catalyst without concentrating the catalyst in specific areas of the carrier. A further need exists for a catalyst carrier that is corrosion resistant and can be cheaply manufactured.

### SUMMARY OF THE INVENTION

An embodiment of the present invention provides a ceramic catalyst carrier having a circular-cell honeycomb structure formed by extrusion, the honeycomb structure comprising a plurality of cells coated with a catalyst layer for oxidizing and deoxidizing toxic chemicals while exhaust gas is passing therethrough, wherein the cell having a passage and a coating layer is substantially circular and integrally formed with the ceramic carrier.

In one embodiment of the present invention, the cells are separated by equal spaces in a row, and each row comprising cells is positioned with displacement by radius of the cell to other rows which are next thereto.

In a preferred embodiment of the present invention, the thinnest portion of a partition wall separating each cell has a thickness of not more than 165□ with a cell density of more than 400cpsi.

Another embodiment of the invention is a method for forming a catalyst carrier comprising extruding a ceramic material and catalyst layer material in a honeycomb structure, which has passages therethrough that have a substantially circular cross-section.

### BRIEF DESCRIPTION OF THE DRAWINGS

The aforementioned aspects and other features of the present invention will be explained in the following description, taken in conjunction with the accompanying drawings, wherein:
Fig. 1 is a cross-sectional view of an embodiment of a ceramic catalyst carrier having circular-cell honeycomb structure according to the present invention;
Fig. 2 is a cross-sectional view of a catalyst carrier having a rectangular-cell honeycomb structure according to a prior art;
Fig. 3 is a cross-sectional view of a catalyst carrier having a hexagonal-cell honeycomb structure according to a prior art;
Fig. 4 is a microscopic view of the catalyst carrier having a rectangular-cell honeycomb structure according to a prior art, of which cell density is 900cpsi/2.5mil;
Fig. 5 is an partially enlarged view of the Fig. 4, which shows distribution of a catalyst coating layer;
Fig. 6 is a perspective view of a catalyst carrier having a rectangular-cell honeycomb structure according to a prior art, which illustrates erosion of partition walls;
Fig. 7 is a microscopic view of a catalyst carrier having a rectangular-cell honeycomb structure according to a prior art, which illustrates erosion of partition walls;
Fig. 8 is a perspective view of a catalyst carrier having hexagonal-cell honeycomb structure according to a prior art, which illustrates erosion of partition walls; and
Fig. 9 is a ceramic catalyst carrier comprising a plurality of pipes according to a prior art.

### DETAILED DESCRIPTION OF PREFERRED EMBODIMENTS

Hereinafter, embodiments of the present invention are described in detail with reference to the accompanying drawings.

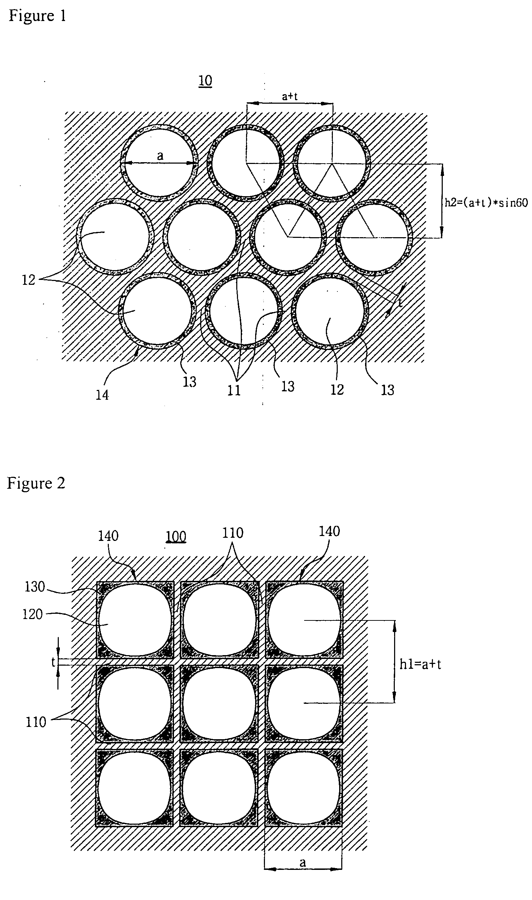

The accompanying Fig. 1 illustrates a cross-sectional view of a ceramic catalyst carrier of an embodiment according to the present invention. In that embodiment of the present invention, a catalyst carrier 10 is manufactured by extrusion, which comprises steps of providing ceramic material to a compressor and extruding the ceramic material through a mold to form a carrier having a uniform cross-section. The ceramic catalyst carrier has a cross-section of circular-cell honeycomb structures to efficiently contact with exhaust gas. A plurality of passages 12 having the catalyst carrier 10 serve to purify the exhaust gas by oxidation and/or deoxidation.

As shown in Fig. 1, the catalyst carrier has a circular-cell structure that is formed by extrusion, wherein the inner surface of the circular cell 14 is preferably made of a ceramic material in order to have a porous property for firmly attaching a catalyst layer 13 thereon and high-temperature resistance. Beneficially, a catalyst layer 13 is coated on the inner surface of the cell passage with uniform thickness so that the catalyst layer 13 has same cross-sectional (circular) shape as circular cells 14. Considering that only the inner surface of the cell 14 is coated with a catalyst and the catalyst layer can be thin compared to the prior art, it is possible to reduce the amount of the catalyst, which generally consists of precious metals, used in the carrier.

In the prior art, use of rectangular or hexagonal cell structures disadvantageously concentrates the catalyst on angular portions of the cells resulting in a waste of the catalyst and decreasing the purification efficiency ("purifiability").

Unlike a circular-cell structure of a catalyst carrier made by putting together individual pipes, a partition wall 11 of the embodiment formed by extrusion according to the present invention can be minimized since the cells 14 neighboring each other can share one partition wall 11 together. Thus, the overall heat capacity of the catalyst carrier is lowered so that time required for reaching the activating temperature of the catalyst can be shortened. Therefore, the efficiency of purification is significantly improved.

In a preferred embodiment of the present invention, the thinnest portion of the partition wall 11 has a thickness of not more than 165□ with a cell density of more than 400cpsi.

Moreover, because the partition wall 11 is defined by the circumference of the circular-cells 14, the thickness the partition wall 11 reaches its maximum at the furthest portion from the center of the cell and a minimum at the closest portion from the center of the cell. Compared with a conventional catalyst carrier of a rectangular-cell structure or hexagonal cell structure having a partition wall of uniform thickness, the partition wall of an embodiment according to the present invention is advantageous in that the portion vulnerable to the erosion by an exhaust gas is minimized compared to such conventional catalyst carriers. Accordingly, the mechanical strength of cell structure according to the present invention is superior to that of the prior arts.

In the embodiment of the present invention, the cells are separated by equal spaces in a row, and each row comprising cells is positioned with displacement by approximately one radius of the cell to other rows which are next thereto. Therefore, packing efficiency is maximized, and the overall height of the catalyst carrier can be minimized while increasing cell-density. As shown in Fig. 1, "a" stands for a diameter of the cell 14, and "t" stands for minimum thickness of the partition wall 11. A height between the centers of the cells vertically disposed is (a+t)sin60°. As the cell-density increases, the contact area of a catalyst layer with an exhaust gas accordingly increases so that purifiability can be improved.

As described above, a catalyst carrier having a circular cell honeycomb structure according to the present invention is advantageous in that the catalyst layer can be uniformly coated on the inner surface of the cell while reducing the amount of a catalyst consisting of precious metals, and the cell-density can be increased by minimizing the height between the centers of the cells vertically disposed, whereby the purifiability is improved. Finally, as the structure is formed by extrusion, in one embodiment the catalyst can be coated on the walls thereof during the extrusion process, and in another embodiment the catalyst can be co-extruded with the ceramic carrier.

Therefore, one embodiment of the current invention is a ceramic catalyst carrier with a honeycomb structure comprising: a plurality of cell passages each having a substantially circular interior cross section that are integrally formed with the ceramic catalyst carrier by extrusion; a plurality of partition walls separating a cell; and a catalyst layer coated on the inner surface of the cell passages, wherein the cells comprising said cell passage and said catalyst are integrally formed with catalyst carrier. Another embodiment of the invention has the cells separated by equal spaces in a row, wherein each said row is positioned with displacement of one radius of said cell to other rows which are contacting same. Another embodiment of the invention requires the thinnest portion of the partition wall to have a thickness of not more than 165□. Another embodiment of the invention requires a cell density of more than 400 cpsi.

Another embodiment of the invention is a ceramic catalyst carrier comprising: a plurality of cell passages arranged in a honeycomb structure, said cell passages having an opening with a substantially circular cross-section, walls separating the cell passages, wherein such walls are formed from extruded ceramic; and a catalyst coating covering the walls of the cell passage. Advantageously the ceramic catalyst carrier is formed during the extrusion process.

Another embodiment of the invention is a method for forming a catalyst carrier comprising extruding a ceramic material and catalyst layer material in a honeycomb structure wherein the honeycomb structure has a substantially circular cross-section.

## Claims

1. A ceramic catalyst carrier with a honeycomb structure comprising:
a plurality of cell passages integrally formed with the ceramic catalyst carrier by extrusion, said cell passages having a cross-sectional shape of circle; a plurality of partition walls each separating a cell; and
a catalyst coated on the inner surface of the cell passages, wherein the cells comprising said cell passage and said catalyst are integrally formed with the catalyst carrier.

2. The ceramic catalyst carrier of claim 1, wherein the cells are separated by equal spaces in a row and wherein each said row is positioned with displacement of one radius of said cell to other rows which are adjacent thereto.

3. The ceramic catalyst carrier of claim 1, wherein the cells form a honeycomb structure, wherein cells are separated by equal spaces in a row and wherein each said row is positioned with vertical displacement of about (a+t)sin60°, wherein "a" is the interior diameter of the cell, and "t" is the minimum thickness of the partition wall.

4. The ceramic catalyst carrier of claim 3, wherein the thinnest portion of the partition wall has a thickness of not more than 165□.

5. The ceramic catalyst carrier of claim 1 having a cell density of more than 400cpsi, wherein the thinnest portion of the partition wall has a thickness of not more than 165□.

6. A ceramic catalyst carrier comprising:
a plurality of cell passages arranged in a honeycomb structure, said cell passages having an opening with a substantially circular cross-section; walls separating the cell passages, wherein such walls are formed from extruded ceramic; and
a catalyst coating covering the interior cell walls of the cell passage and formed during the extrusion process.

7. A method for forming a ceramic catalyst carrier comprising:
extruding a ceramic material and catalyst layer material in a honeycomb structure, wherein the honeycomb structure comprises cell passages and the passages have a substantially circular cross-section.
